# EUROPEAN PATENT SPECIFICATION

(11) **EP 4 280 173 B1**
(45) Date of publication and mention of the grant of the patent: **26.11.2025**
(21) Application number: 23173831.1
(22) Date of filing: 17.05.2023
(51) Int. Cl.: G06V 10/80, G06V 10/82, G06N 3/045

(54) **MULTI-TASK OBJECT DETECTION METHOD, ELECTRONIC DEVICE, MEDIUM, AND VEHICLE**
MULTITASK-OBJEKTERKENNUNGSVERFAHREN, ELEKTRONISCHE VORRICHTUNG, MEDIUM UND FAHRZEUG
PROCÉDÉ DE DÉTECTION D'OBJET MULTITÂCHE, DISPOSITIF ÉLECTRONIQUE, SUPPORT ET VÉHICULE

(30) Priority: 17.05.2022 CN 202210541509
(43) Date of publication of application: 22.11.2023
(73) Proprietor: Anhui NIO Autonomous Driving Technology Co., Ltd., Hefei, Anhui 230601 (CN)
(72) Inventor: MA, Ningning, Jiading Shanghai (CN)
(74) Representative: Vossius & Partner Patentanwälte Rechtsanwälte mbB

(56) References cited:
- GHIASI GOLNAZ ET AL: "NAS-FPN: Learning Scalable Feature Pyramid Architecture for Object Detection", 2019 IEEE/CVF CONFERENCE ON COMPUTER VISION AND PATTERN RECOGNITION (CVPR), IEEE, 15 June 2019 (2019-06-15), pages 7029 - 7038, XP033687521, DOI: 10.1109/CVPR.2019.00720
- LIN TSUNG-YI ET AL: "Feature Pyramid Networks for Object Detection", 2017 IEEE CONFERENCE ON COMPUTER VISION AND PATTERN RECOGNITION (CVPR), IEEE COMPUTER SOCIETY, US, 21 July 2017 (2017-07-21), pages 936 - 944, XP033249432, ISSN: 1063-6919, [retrieved on 20171106], DOI: 10.1109/CVPR.2017.106
- KIM SEUNG-WOOK ET AL: "Parallel Feature Pyramid Network for Object Detection", 20181006, vol. 15, no. 474210, 6 October 2018 (2018-10-06), pages 239 - 256, XP047635705

## Description

### Technical Field

The disclosure relates to the field of autonomous driving technologies, and specifically provides a multi-task object detection method, an electronic device, a medium, and a vehicle.

### Background Art

At present, multi-task detection in conventional vehicle autonomous driving is usually implemented by using a neural network model, such as e.g. disclosed in GHIASI GOLNAZ ET AL: "NAS-FPN: Learning Scalable Feature Pyramid Architecture for Object Detection", IEEE (2019-06-15). However, when a neural network is shared for multi-task detection, the detection effect is significantly reduced. In the existing technologies, a backbone network is independently assigned for each task. As a result, the efficiency of multi-task object detection is low, and the detection accuracy is difficult to meet actual requirements.

Correspondingly, a new multi-task object detection solution is required in the field to solve the above problem.

### Summary of the Invention

To overcome the above defects, the disclosure is proposed to solve or at least partially solve the technical problem of the low detection accuracy or poor detection effect of an existing multi-task detection method. The invention provides a multi-task object detection method, an electronic device, a medium, and a vehicle.

According to a first aspect, the the invention as defined in independent claim 1 provides a multi-task object detection method, including: obtaining images captured by a vehicle-mounted sensor; inputting the images into a multi-scale feature extraction network to extract multi-scale features; inputting the multi-scale features into a multi-scale feature fusion network to obtain fused features, wherein the multi-scale feature fusion network comprises multiple optimal fusion paths, and each optimal fusion path corresponds to one of multiple tasks; and inputting, into a corresponding detection head, the fused features output from each optimal fusion path, to obtain a detection result, wherein each detection head is capable of detecting one of the multiple tasks.

The method further includes: constructing an object detection network comprising the multi-scale feature extraction network, a feature pyramid unit, and multiple detection heads, wherein the feature pyramid unit comprises N feature pyramid networks, each feature pyramid network comprises M feature extraction layers, the connection from an m^{th} layer to an (m+1)^{th} layer of an n^{th} feature pyramid network is to perform an upsampling operation on features, and the connection from the m^{th} layer of the n^{th} feature pyramid network and an m^{th} layer of an (n+1)^{th} feature pyramid network is to perform a convolution operation on features with a convolution kernel of 1*1, wherein N ≥ 2, M is equal to the number of feature extraction layers in the multi-scale feature extraction network, 1 ≤ n ≤ N-1, and 1 ≤ m ≤ M-1; and training the object detection network, and obtaining the multiple optimal fusion paths from paths between all the feature extraction layers of the N feature pyramid networks, wherein the multiple optimal fusion paths constitute the multi-scale feature fusion network.

In an implementation, the training the object detection network, and obtaining the multiple optimal fusion paths from paths between all the feature extraction layers of the N feature pyramid networks includes: inputting a training set into the object detection network, and traversing the paths between all the feature extraction layers of the N feature pyramid networks to obtain parameters of the object detection network; and inputting a verification set into the object detection network for verification to obtain the multiple optimal fusion paths.

In an implementation, the inputting a training set into the object detection network, and traversing the paths between all the feature extraction layers of the N feature pyramid networks to obtain parameters of the object detection network includes: selecting a type of path from possible paths corresponding to each of K types of tasks to form K paths for a single training, where K is a total number of the multiple tasks; and traversing K paths formed by all of the possible paths that correspond to each of the tasks, to repeat the single training.

In an implementation, the inputting a verification set into the object detection network for verification to obtain the multiple optimal fusion paths includes: selecting the path corresponding to the minimum distance between the test result obtained and the true labels from the verification set as the optimal fusion path.

In an implementation, M = 4.

In an implementation, the multi-task object detection includes at least two of object detection, drivable area segmentation, and lane detection.

According to a second aspect, an electronic device is provided. The electronic device includes at least one processor and a storage apparatus, the storage apparatus is adapted to store multiple program codes, and the program codes are adapted to be loaded and executed by the at least one processor to perform the multi-task object detection method according to any one of the above implementations.

According to a third aspect, a non-transitory computer-readable storage medium having a plurality of program codes stored thereon that, when executed by at least one processor, cause the at least one processor to perform a multi-task object detection method according to any one of the above implementations.

According to a fourth aspect, a vehicle is provided, including the above electronic device.

The above one or more technical solutions of the disclosure have at least one or more of the following beneficial effects:
The disclosure provides a multi-task object detection method. The image captured by the vehicle-mounted sensor is first obtained, then the image is input into the multi-scale feature extraction network to extract multi-scale features, then the multi-scale features are input into the multi-scale feature fusion network to obtain the fused features, and finally the fused features output from each optimal fusion path are input into a corresponding detection head to obtain the detection result. In this way, the accurate multi-task object detection is implemented through the optimal fusion path corresponding to each of the multiple tasks, and the detection efficiency is improved while the detection accuracy is improved.

### Brief Description of the Drawings

The disclosed content of the invention will become more readily understood with reference to the accompanying drawings. Those skilled in the art readily understand that these accompanying drawings are merely for illustrative purposes and are not intended to limit the scope of protection of the invention as defined in the appended claims. In addition, similar components are represented by similar numbers in the figures, in which:
FIG. 1 is a schematic flowchart of main steps of a multi-task object detection method according to an embodiment of the disclosure;
FIG. 2 is a schematic diagram of a structure of an object detection network according to an embodiment of the disclosure;
FIG. 3 is a type of path corresponding to a feature pyramid network according to an embodiment of the disclosure;
FIG. 4a is a type of path corresponding to a feature pyramid network according to an embodiment of the disclosure;
FIG. 4b is a type of path corresponding to a feature pyramid network according to an embodiment of the disclosure;
FIG. 4c is a type of path corresponding to a feature pyramid network according to an embodiment of the disclosure;
FIG. 4d is a type of path corresponding to a feature pyramid network according to an embodiment of the disclosure;
FIG. 5 shows three optimal fusion paths corresponding to three types of tasks according to an embodiment of the disclosure; and
FIG. 6 is a schematic diagram of a structure of an electronic device according to an embodiment of the disclosure.

### Detailed Description of Embodiments

Some implementations of the disclosure are described below with reference to the accompanying drawings. Those skilled in the art should understand that these implementations are only used to explain the technical principles of the disclosure, and are not intended to limit the scope of protection of the invention as defined in the appended claims.

In the description of the disclosure, a "module" or "processor" may include hardware, software, or a combination thereof. A module may include a hardware circuit, various suitable sensors, a communication port, and a memory, or may include a software part, for example, program code, or may be a combination of software and hardware. The processor may be a central processing unit, a microprocessor, a graphics processing unit, a digital signal processor, or any other suitable processor. The processor has a data and/or signal processing function. The processor may be implemented in software, hardware, or a combination thereof. A non-transitory computer-readable storage medium includes any suitable medium that may store program codes, for example, a magnetic disk, a hard disk, an optical disc, a flash memory, a read-only memory, or a random access memory. The term "A and/or B" indicates all possible combinations of A and B, for example, only A, only B, or A and B. The term "at least one of A or B" or "at least one of A and B" has a meaning similar to "A and/or B" and may include only A, only B, or A and B. The terms "a/an" and "this" in the singular form may also include the plural form.

At present, multi-task detection in conventional vehicle autonomous driving is usually implemented by using a neural network model. However, when a neural network is shared for multi-task detection, the detection effect is significantly reduced. In the existing technologies, a backbone network is independently assigned for each task. As a result, the efficiency of multi-task object detection is low, and the detection accuracy is difficult to meet actual requirements. To this end, the disclosure proposes a multi-task object detection method, an electronic device, a medium, and a vehicle. The image captured by the vehicle-mounted sensor is first obtained, then the image is input into the multi-scale feature extraction network to extract multi-scale features, then the multi-scale features are input into the multi-scale feature fusion network to obtain the fused features, and finally the fused features output from each optimal fusion path are input into a corresponding detection head to obtain the detection result. In this way, the accurate multi-task object detection is implemented through the optimal fusion path corresponding to each of the multiple tasks, and the detection efficiency is improved while the detection accuracy is improved.

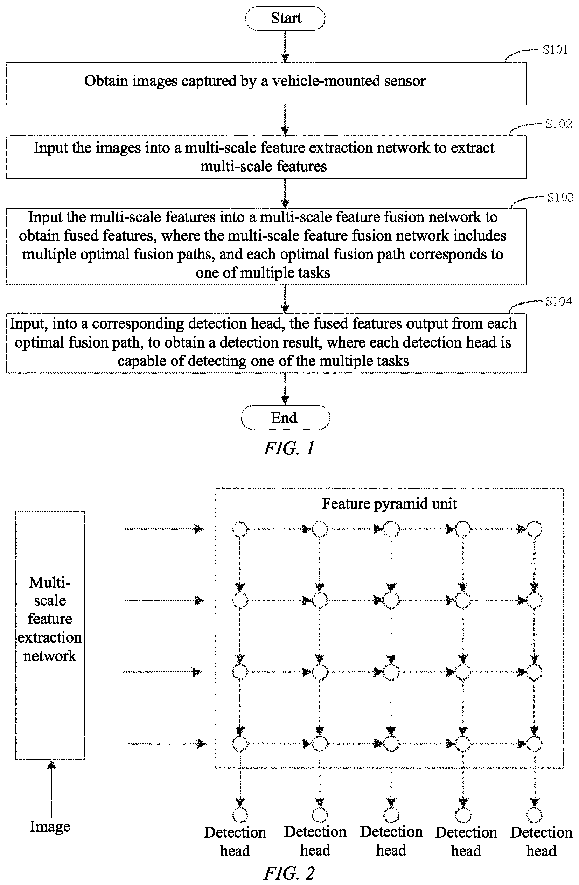

FIG. 1 is a schematic flowchart of main steps of a multi-task object detection method according to an embodiment of the disclosure.

In a specific implementation, the multi-task object detection in the disclosure includes at least two of object detection, drivable area segmentation, and lane detection. The object detection may be detection of an obstacle, a vehicle, and the like, and a location and a type of an obstacle or a vehicle is usually marked in a detection block. The lane line detection is detection of key points related to a lane line, and then all the key points are connected to obtain the lane line.

As shown in FIG. 1, the multi-task object detection method in this embodiment of the disclosure mainly includes the following step S101 to step S104.

In step S101, images captured by a vehicle-mounted sensor are obtained.

The vehicle-mounted sensor may be specifically a vehicle-mounted camera, a Lidar, a Radar, or the like.

In step S102, the image are input into a multi-scale feature extraction network to extract multi-scale features. The multi-scale feature extraction network may be used to extract features of different scales from different layers of the network. Specifically, the multi-scale feature extraction network herein may be a neural network such as Resnet and VGG and may be used to extract the multi-scale features of the input image, but is not limited thereto, and may alternatively be another neural network that may be used to extract the multi-scale features of the input image.

In step S103, the multi-scale features are input into a multi-scale feature fusion network to obtain fused features, where the multi-scale feature fusion network includes multiple optimal fusion paths, and each optimal fusion path corresponds to one of multiple tasks.

Specifically, the multi-scale feature fusion network is obtained by training a constructed object detection network.

In a specific implementation, the object detection network includes the multi-scale feature extraction network, a feature pyramid unit, and multiple detection heads.

The feature pyramid unit includes N feature pyramid networks (FPN), each feature pyramid network includes M feature extraction layers, the connection from an m^{th} layer to an (m+1)^{th} layer of an n^{th} feature pyramid network is to perform an upsampling operation on features, and the connection from the m^{th} layer of the n^{th} feature pyramid network and an m^{th} layer of an (n+1)^{th} feature pyramid network is to perform a convolution operation on features with a convolution kernel of 1*1, where N ≥ 2, M is equal to the number of feature extraction layers in the multi-scale feature extraction network, 1 ≤ n ≤ N-1, and 1 ≤ m ≤ M-1.

The number of detection heads is the same as that of task types, and each detection head may be, for example, a region proposal network (RPN), YOLO, or SSD. This is not limited in the disclosure. For example, for the three tasks of object detection, drivable area segmentation, and lane detection, three detection heads are disposed, and after training, each detection head corresponds to an output result of one of the three tasks.

In the example shown in FIG. 2, the feature pyramid unit includes five feature pyramid networks (five columns in the figure), and each feature pyramid network has four feature extraction layers (four rows of nodes represented by circles in the figure). A person skilled in the art can understand that the number of feature extraction layers in each feature pyramid network depends on a specific number of extraction layers in the previous multi-scale feature extraction network.

In addition, a person skilled in the art can understand that connection between any two feature extraction layers in each feature pyramid network (indicated by a vertical arrow) is to perform an upsampling operation (for example, 2x upsampling) on features output by a previous layer, and connection between adjacent feature pyramid networks (indicated by a horizontal arrow) is to perform a convolution operation with a convolution kernel of 1*1 on features output by a previous layer.

It should be noted that the feature extraction layers of the feature pyramid illustrated in FIG. 2 are arranged in columns, but the disclosure is not limited thereto, and may alternatively be arranged in rows.

After the object detection network is constructed, the object detection network is trained to obtain multiple optimal fusion paths from the paths between all feature extraction layers of the feature pyramid network of the object detection network, and then the multiple optimal fusion paths constitute the multi-scale feature fusion network to extract fused features.

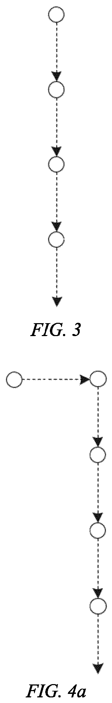

Exemplarily, in FIG. 2, for a feature that is input from the first feature extraction layer of the first feature pyramid network and output from the fourth feature extraction layer of the first feature pyramid network, there is one possible path, that is, a path shown in FIG. 3.

Exemplarily, in FIG. 2, for a feature that is input from the first feature extraction layer of the first feature pyramid network and output from the fourth feature extraction layer of the second feature pyramid network, there are four possible paths, that is, paths shown in FIG. 4a to FIG. 4d.

A first path is a path from the first feature extraction layer of the first feature pyramid network to the fourth feature extraction layer of the second feature pyramid network through the first feature extraction layer of the second feature pyramid network (FIG. 4a).

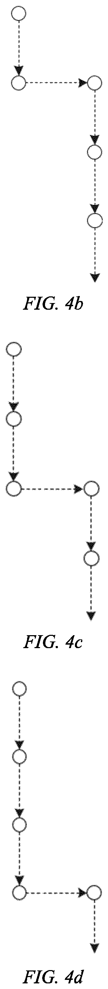

A second path is a path from the first feature extraction layer of the first feature pyramid network to the fourth feature extraction layer of the second pyramid network through the second feature extraction layer of the first feature pyramid network and the second feature extraction layer of the second pyramid network (FIG. 4b).

A third path is a path from the first feature extraction layer of the first feature pyramid to the fourth feature extraction layer of the second feature pyramid through the third feature extraction layer of the first feature pyramid and the third feature extraction layer of the second feature pyramid (FIG. 4c).

A fourth path is a path from the first feature extraction layer of the first feature pyramid to the fourth feature extraction layer of the second feature pyramid through the fourth feature extraction layer of the first feature pyramid (FIG. 4d).

During training, training data in the disclosure can be divided into a training set and a verification set according to a preset ratio. For example, the preset ratio herein may be 8:2 or 7:3. this is not limited. The training set is used to train the object detection network, which is specifically: traversing the paths between all the feature extraction layers of the N feature pyramid networks to optimize parameters of the object detection network. The verification set is mainly to verify the trained object detection network, so as to extract the multiple optimal fusion paths corresponding to the multiple tasks.

In a specific implementation, the inputting a training set into the object detection network, and traversing the paths between all the feature extraction layers of the N feature pyramid networks to obtain parameters of the object detection network includes: selecting a type of path from possible paths corresponding to each of K types of tasks (corresponding to K detection heads) to form K paths for a single training, where K is a total number of the multiple tasks; and traversing K paths formed by all of the possible paths that correspond to each of the tasks, to repeat the single training.

In a process of training the object detection network through the training set to optimize the parameters of the object detection network, specifically, a path is arbitrarily selected from all possible paths corresponding to any one of the K types of tasks, so that K paths are correspondingly selected for the K types of tasks, a single training is performed based on the K paths, after the training, a path continues to be selected from the possible paths corresponding to each of the K types of tasks, to form K paths for a single training, and K paths formed by all of the possible paths corresponding to each of the tasks are traversed, to repeat the single training, until all paths corresponding to each task are trained.

For example, there are three types of tasks, such as object detection, drivable area segmentation, and lane detection. Assuming that there are five possible paths for each task, a total number of paths that need to be traversed is 5³.

In terms of specific code implementation, three for loop statements may be used for implementation, for example, the first path is selected for the first task, the second path is selected for the second task, and five paths of the third task are traversed. Then, the first path is selected for the first task, the second path is selected for the second task, and five paths of the third task are traversed, until the second task is traversed. Then, the second path is selected for the first task, a path is selected for the second task, the third task is traversed, and so on. This repeats until all paths are trained.

Then, a verification set is input into the object detection network for verification to obtain the multiple optimal fusion paths. Therefore, the multiple optimal fusion paths constitute the multi-scale feature fusion network used in actual multi-task object detection. A person skilled in the art can understand that the optimal fusion path is an optimal combination of a series of operations performed on input features for a corresponding task (for example, 1*1 convolution is performed for several times first, and upsampling is then performed for several times).

In a specific example, a path corresponding to the minimum distance between true labels and a test result obtained based on the verification set is selected as an optimal fusion path. The true label herein is a label corresponding to the verification set.

Specifically, during obtaining of the optimal fusion path based on the verification set, the verification set may be input into the object detection network, each path corresponds to a test result, each test result is compared with the true label, and finally the path corresponding to the minimum distance between the true label and the test result obtained based on the verification set is selected as an optimal fusion path.

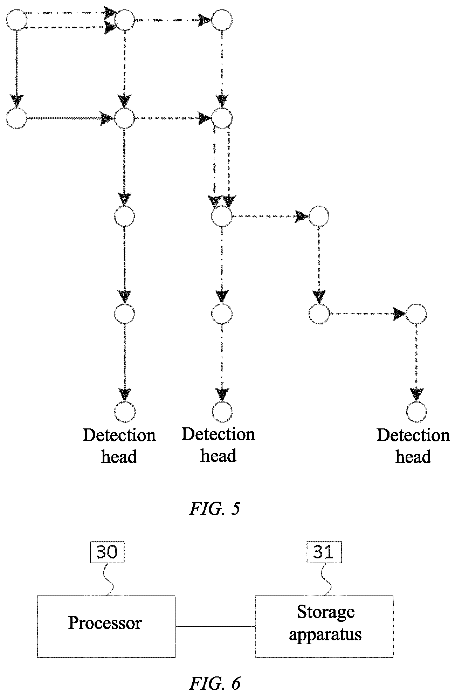

As shown in FIG. 5, three optimal fusion paths are obtained for three types of tasks. That is, for a task 1, such as the object detection task, an optimal path is a route shown in a solid line in the figure. For a task 2, such as the drivable area segmentation task, an optimal path is a route shown in a dashed line in the figure. For a task 3, such as the lane line detection task, an optimal path is a route shown in a dotted line in the figure. In this way, the multi-scale feature fusion network used in object detection of these three tasks is obtained.

The above description focuses on the process of training the feature pyramid unit. A person skilled in the art can understand that when the training set is used to train the entire object detection network, the multi-scale feature extraction network and the detection head are also trained, and details will not be repeated herein.

The training set is input into the object detection network, the paths between all feature extraction layers of N feature pyramid networks are traversed to obtain the parameters of the object detection network, the verification set is input into the object detection network for verification, to obtain the multiple optimal fusion paths, and the multiple optimal fusion paths constitute the multi-scale feature fusion network to extract fused features, so that the prior-art technical problem that the detection effect is significantly reduced when a neural network (for example, only one feature pyramid network) is shared for multi-task detection is solved, and the detection efficiency is improved.

The object detection network is constructed, where the object detection network includes the multi-scale feature extraction network, the feature pyramid unit, and the multiple detection heads, the object detection network is trained, and the multiple optimal fusion paths are then obtained from the paths between all feature extraction layers of N feature pyramid networks. This provides basic support for subsequent multi-task object detection. In addition, compared with the prior art in which a multi-task detection network including a single feature pyramid network is directly used for feature extraction, this helps to improve the accuracy and the efficiency of the multi-task object detection.

In step S104, fused features output from each optimal fusion path are input into a corresponding detection head, to obtain a detection result.

As shown in FIG. 5, fused features are output from the three optimal fusion paths respectively, and respectively enter a detection head of the task 1 (such as a detection head of the object detection task), a detection head of the task 2 (such as a detection head of the drivable area segmentation task), and a detection head of the task 3 (a detection head of the lane detection task), so as to output an object detection result (type and coordinate information) from the detection head of the object detection task, output a drivable area detection result (type and coordinate information) from the detection head of the drivable area segmentation task, and output a lane detection result (type and coordinate information) from the detection head of the lane detection task.

Based on the above step S101 to step S104, the image captured by the vehicle-mounted sensor is first obtained, then the image is input into the multi-scale feature extraction network to extract multi-scale features, then the multi-scale features are input into the multi-scale feature fusion network to obtain the fused features, and finally the fused features output from each optimal fusion path are input into a corresponding detection head to obtain the detection result. In this way, when there is multi-task object detection, the optimal fusion path corresponding to each task may be used to extract a detection result corresponding to the task, which improves the detection accuracy of each task. In addition, compared with simultaneous multi-task detection through a single feature pyramid network, simultaneous multi-task detection through multiple optimal fusion paths helps to improve the detection efficiency.

It should be noted that, although the steps are described in a specific order in the above embodiments, those skilled in the art may understand that in order to implement the effects of the disclosure, different steps are not necessarily performed in such an order, but may be performed simultaneously (in parallel) or in other orders, and these changes shall all fall within the scope of protection of the disclosure.

Those skilled in the art can understand that all or some of the procedures in the method of the above embodiment of the disclosure may also be implemented by a computer program instructing relevant hardware. The computer program may be stored in a computer-readable storage medium, and when the computer program is executed by at least one processor, the steps of the above method embodiments may be implemented. The computer program includes computer program codes, which may be in a source code form, an object code form, an executable file form, some intermediate forms, or the like. The computer-readable storage medium may include: any entity or apparatus that can carry the computer program code, such as a medium, a USB flash drive, a removable hard disk, a magnetic disk, an optical disc, a computer memory, a read-only memory, a random access memory, an electric carrier signal, a telecommunications signal, and a software distribution medium. It should be noted that the content included in the computer-readable storage medium may be appropriately added or deleted depending on requirements of the legislation and patent practice in a jurisdiction. For example, in some jurisdictions, according to the legislation and patent practice, the computer-readable storage medium does not include an electric carrier signal and a telecommunications signal.

Further, the disclosure further provides an electronic device. In an embodiment of an electronic device according to the disclosure, as shown in FIG. 6, the electronic device includes at least one processor 30 and a storage apparatus 31. The storage apparatus may be configured to store a program for executing the multi-task object detection method of the above method embodiments. The at least one processor may be configured to execute the program in the storage apparatus, where the program includes but is not limited to a program for executing the multi-task object detection method of the above method embodiments. For ease of description, only parts related to the embodiments of the disclosure are shown. For specific technical details that are not disclosed, reference may be made to the method part of the embodiments of the disclosure.

Further, the disclosure further provides a non-transitory computer-readable storage medium. In an embodiment of a non-transitory computer-readable storage medium according to the disclosure, the computer-readable storage medium may be configured to store a program for executing the multi-task object detection method of the above method embodiments, where the program may be loaded and executed by at least one processor to perform the above multi-task object detection method. For ease of description, only parts related to the embodiments of the disclosure are shown. For specific technical details that are not disclosed, reference may be made to the method part of the embodiments of the disclosure. The computer-readable storage medium may be a storage apparatus formed by various electronic devices. Optionally, the computer-readable storage medium in the embodiment of the disclosure is a non-transitory computer-readable storage medium.

Further, the disclosure provides a vehicle, including the electronic device described above.

Heretofore, the technical solutions of the disclosure have been described with reference to the preferred implementations shown in the accompanying drawings. However, those skilled in the art can readily understand that the scope of protection of the invention as defined in the appended claims is apparently not limited to these specific implementations. Those skilled in the art may make equivalent changes or substitutions to the related technical features and all the technical solutions with such changes or substitutions shall fall within the scope of protection of the invention as defined in the appended claims.

## Claims

1. **A multi-task** object detection method, **characterized by** comprising:
obtaining images captured by a vehicle-mounted sensor;
inputting the images into a multi-scale feature extraction network to extract multi-scale features;
constructing an object detection network comprising the multi-scale feature extraction network, a feature pyramid unit, and multiple detection heads, wherein the feature pyramid unit comprises N feature pyramid networks, each feature pyramid network comprises M feature extraction layers, the connection from an m^{th} layer to an (m+1)^{th} layer of an n^{th} feature pyramid network is to perform an upsampling operation on features, and the connection from the mth layer of the nth feature pyramid network and an m^{th} layer of an (n+1)^{th} feature pyramid network is to perform a convolution operation on features with a convolution kernel of 1*1, wherein N ≥ 2, M is equal to the number of feature extraction layers in the multi-scale feature extraction network, 1 ≤ n ≤ N - 1, and 1 ≤ m ≤ M - 1;
training the object detection network, and obtaining the multiple optimal fusion paths from paths between all the feature extraction layers of the N feature pyramid networks, wherein the multiple optimal fusion paths constitute the multi-scale feature fusion network;
inputting the multi-scale features into a multi-scale feature fusion network to obtain fused features, wherein the multi-scale feature fusion network comprises multiple optimal fusion paths, and each optimal fusion path corresponds to one of multiple tasks; and
inputting, into a corresponding detection head, the fused features output from each optimal fusion path, to obtain a detection result, wherein each detection head is capable of detecting one of the multiple tasks.

2. The multi-task object detection method according to claim 1, wherein the training the object detection network, and obtaining the multiple optimal fusion paths from paths between all the feature extraction layers of the N feature pyramid networks comprises:
inputting a training set into the object detection network, and traversing the paths between all the feature extraction layers of the N feature pyramid networks to obtain parameters of the object detection network; and
inputting a verification set into the object detection network for verification to obtain the multiple optimal fusion paths.

3. The multi-task object detection method according to claim 2, wherein the inputting a training set into the object detection network, and traversing the paths between all the feature extraction layers of the N feature pyramid networks to obtain parameters of the object detection network comprises:
selecting a type of path from possible paths corresponding to each of K types of tasks to form K paths for a single training, wherein K is a total number of the multiple tasks; and
traversing K paths formed by all of the possible paths that correspond to each of the tasks, to repeat the single training.

4. The multi-task object detection method according to claim 2 or 3, wherein the inputting a verification set into the object detection network for verification to obtain the multiple optimal fusion paths comprises:
selecting the path corresponding to the minimum distance between the test result obtained and the true labels from the verification set as the optimal fusion path.

5. The multi-task object detection method according to claim 1, wherein M = 4.

6. The multi-task object detection method according to claim 1, wherein the multi-task object detection comprises at least two of object detection, drivable area segmentation, and lane detection.

7. An electronic device, comprising at least one processor and a storage apparatus configured to store multiple program codes, wherein the program codes are adapted to be loaded and executed by the at least one processor to perform a multi-task object detection method according to any one of claims 1 to 6.

8. A non-transitory computer-readable storage medium having a plurality of program codes stored thereon that, when executed by at least one processor, cause the at least one processor to perform a multi-task object detection method according to any one of claims 1 to 6.

9. A vehicle, comprising the electronic device according to claim 7.

## Patentansprüche

1. Multitask-Objekterkennungsverfahren, **dadurch gekennzeichnet, dass** es umfasst:
Erhalten von Bildern, die durch einen in einem Fahrzeug angeordneten Sensor aufgenommen werden;
Eingeben der Bilder in ein mehrskaliges Merkmalsextraktionsnetz, um mehrskalige Merkmale zu extrahieren;
Aufbauen eines Objekterkennungsnetzes, dass das mehrskalige Merkmalsextraktionsnetz, eine Merkmalspyramideneinheit und mehrere Erkennungsköpfe umfasst, wobei die Merkmalspyramideneinheit N Merkmalspyramidennetze umfasst, wobei jedes Merkmalspyramidennetz M Merkmalsextraktionsschichten umfasst, wobei die Verbindung von einer m-ten Schicht zu einer (m+1)-ten Schicht eines n-ten Merkmalspyramidennetzes darin besteht, eine Aufwärtswandlungs (Upsampling) -Operation an Merkmalen durchzuführen, und die Verbindung zwischen der m-ten Schicht des n-ten Merkmalspyramidennetzes und einer m-ten Schicht eines (n+1)-ten Merkmalspyramidennetzes darin besteht, eine Faltungsoperation an Merkmalen mit einem Faltungskernel von 1 * 1 durchzuführen, wobei N ≥ 2, M gleich der Anzahl der Merkmalsextraktionsschichten im mehrskaligen Merkmalsextraktionsnetz, 1 ≤ n ≤ N - 1 und 1 ≤ m ≤ M - 1 ist;
Trainieren des Objekterkennungsnetzes und Erhalten der mehreren optimalen Fusionspfade aus den Pfaden zwischen allen Merkmalsextraktionsschichten der N Merkmalspyramidennetze, wobei die mehreren optimalen Fusionspfade das mehrskalige Merkmalsfusionsnetz bilden;
Eingeben der mehrskaligen Merkmale in ein mehrskaliges Merkmalsfusionsnetz, um fusionierte Merkmale zu erhalten, wobei das mehrskalige Merkmalsfusionsnetz mehrere optimale Fusionspfade umfasst und jeder optimale Fusionspfad einer von mehreren Aufgaben entspricht; und
Eingeben, in einen entsprechenden Erkennungskopf, der fusionierten Merkmale, die von jedem optimalen Fusionspfad ausgegeben werden, um ein Erkennungsergebnis zu erhalten, wobei jeder Erkennungskopf in der Lage ist, eine der mehreren Aufgaben zu erkennen.

2. Multitask-Objekterkennungsverfahren gemäß Anspruch 1, wobei das Trainieren des Objekterkennungsnetzes und Erhalten der mehreren optimalen Fusionspfade aus den Pfaden zwischen allen Merkmalsextraktionsschichten der N Merkmalspyramidennetze umfasst:
Eingeben eines Trainingssatzes in das Objekterkennungsnetz und Durchlaufen der Pfade zwischen allen Merkmalsextraktionsschichten der N Merkmalspyramidennetze, um Parameter des Objekterkennungsnetzes zu erhalten; und
Eingeben eines Verifizierungssatzes in das Objekterkennungsnetz zur Verifizierung, um die mehreren optimalen Fusionspfade zu erhalten.

3. Multitask-Objekterkennungsverfahren gemäß Anspruch 2, wobei das Eingeben eines Trainingssatzes in das Objekterkennungsnetz und Durchlaufen der Pfade zwischen allen Merkmalsextraktionsschichten der N Merkmalspyramidennetze, um Parameter des Objekterkennungsnetzes zu erhalten, umfasst:
Auswählen eines Pfadtyps aus den möglichen Pfaden, die jedem von K Aufgabentypen entsprechen, um K Pfade für ein Einzeltraining zu bilden, wobei K eine Gesamtzahl der mehreren Aufgaben ist; und
Durchlaufen von K Pfaden, die durch alle möglichen Pfade gebildet werden, die jeder der Aufgaben entsprechen, um das Einzeltraining zu wiederholen.

4. Multitask-Objekterkennungsverfahren gemäß Anspruch 2 oder 3, wobei das Eingeben eines Verifizierungssatzes in das Objekterkennungsnetz zur Verifizierung, um die mehreren optimalen Fusionspfade zu erhalten, umfasst:
Auswählen des Pfades, der dem geringsten Abstand zwischen dem erhaltenen Testergebnis und den wahren Etiketten aus dem Verifizierungssatz entspricht, als optimalen Fusionspfad.

5. Multitask-Objekterkennungsverfahren gemäß Anspruch 1, wobei M = 4.

6. Multitask-Objekterkennungsverfahren gemäß Anspruch 1, wobei die Multitask-Objekterkennung mindestens zwei der folgenden umfasst: Objekterkennung, Segmentierung des befahrbaren Bereichs und Fahrspurerkennung.

7. Elektronische Vorrichtung, umfassend mindestens einen Prozessor und eine Speichereinrichtung, die dafür ausgelegt ist, mehrere Programmcodes zu speichern, wobei die Programmcodes geeignet sind, durch den mindestens einen Prozessor geladen und ausgeführt zu werden, um ein Multitask-Objekterkennungsverfahren gemäß einem der Ansprüche 1 bis 6 durchzuführen.

8. Nicht-transitorisches computerlesbares Speichermedium mit einer Vielzahl von darauf gespeicherten Programmcodes, die, wenn sie durch mindestens einen Prozessor ausgeführt werden, den mindestens einen Prozessor veranlassen, ein Multitask-Objekterkennungsverfahren gemäß einem der Ansprüche 1 bis 6 durchzuführen.

9. Fahrzeug, das die elektronische Vorrichtung gemäß Anspruch 7 umfasst.

## Revendications

1. Procédé de détection d'objets multitâche, **caractérisé en ce qu'**il comprend :
l'obtention d'images capturées par un capteur monté sur un véhicule ;
l'introduction des images dans un réseau d'extraction de caractéristiques multiéchelle afin d'extraire des caractéristiques multiéchelle ;
la construction d'un réseau de détection d'objets comprenant le réseau d'extraction de caractéristiques multiéchelle, une unité à pyramide de caractéristiques, et de multiples têtes de détection, l'unité à pyramide de caractéristiques comprenant N réseaux à pyramide de caractéristiques, chaque réseau à pyramide de caractéristiques comprenant M couches d'extraction de caractéristiques, la connexion d'une m-ième couche à une (m+1)-ième couche d'un n-ième réseau à pyramide de caractéristiques servant à réaliser une opération de suréchantillonnage sur des caractéristiques, et la connexion de la m-ième couche du n-ième réseau à pyramide de caractéristiques et d'une m-ième couche d'un (n+1)-ième réseau à pyramide de caractéristiques servant à réaliser une opération de convolution sur des caractéristiques à l'aide d'un noyau de convolution de 1*1, N ≥ 2, M étant égal au nombre de couches d'extraction de caractéristiques du réseau d'extraction de caractéristiques multiéchelle, 1 ≤ n ≤ N-1, et 1 ≤ m ≤ M-1 ;
l'entraînement du réseau de détection d'objets, et l'obtention des multiples chemins de fusion optimaux à partir de chemins entre toutes les couches d'extraction de caractéristiques des N réseaux à pyramide de caractéristiques, les multiples chemins de fusion optimaux constituant le réseau de fusion de caractéristiques multiéchelle ;
l'introduction des caractéristiques multiéchelle dans un réseau de fusion de caractéristiques multiéchelle afin d'obtenir des caractéristiques fusionnées, le réseau de fusion de caractéristiques multiéchelle comprenant de multiples chemins de fusion optimaux, et chaque chemin de fusion optimal correspondant à l'une de multiples tâches ; et
l'introduction, dans une tête de détection correspondante, des caractéristiques fusionnées délivrées par chaque chemin de fusion optimal, afin d'obtenir un résultat de détection, chaque tête de détection étant apte à détecter l'une des multiples tâches.

2. Procédé de détection d'objets multitâche selon la revendication 1, dans lequel l'entraînement du réseau de détection d'objets, et l'obtention des multiples chemins de fusion optimaux à partir de chemins entre toutes les couches d'extraction de caractéristiques des N réseaux à pyramide de caractéristiques comprennent :
l'introduction d'un ensemble d'entraînement dans le réseau de détection d'objets, et le parcours des chemins entre toutes les couches d'extraction de caractéristiques des N réseaux à pyramide de caractéristiques afin d'obtenir des paramètres du réseau de détection d'objets ; et
l'introduction d'un ensemble de vérification dans le réseau de détection d'objets pour vérification afin d'obtenir les multiples chemins de fusion optimaux.

3. Procédé de détection d'objets multitâche selon la revendication 2, dans lequel l'introduction d'un ensemble d'entraînement dans le réseau de détection d'objets, et le parcours des chemins entre toutes les couches d'extraction de caractéristiques des N réseaux à pyramide de caractéristiques afin d'obtenir des paramètres du réseau de détection d'objets comprennent :
la sélection d'un type de chemin parmi des chemins possibles correspondant à chacun de K types de tâches afin de former K chemins pour un entraînement unique, K représentant le nombre total des multiples tâches ; et
le parcours des K chemins formés par tous les chemins possibles correspondant à chacune des tâches, afin de répéter l'entraînement unique.

4. Procédé de détection d'objets multitâche selon la revendication 2 ou 3, dans lequel l'introduction d'un ensemble de vérification dans le réseau de détection d'objets pour vérification afin d'obtenir les multiples chemins de fusion optimaux comprend :
la sélection du chemin correspondant à la distance minimale entre le résultat de test obtenu et les étiquettes réelles issues de l'ensemble de vérification en tant que chemin de fusion optimal.

5. Procédé de détection d'objets multitâche selon la revendication 1, dans lequel M = 4.

6. Procédé de détection d'objets multitâche selon la revendication 1, dans lequel la détection d'objets multitâche comprend au moins deux des opérations suivantes : une détection d'objets, une segmentation de zone praticable, et une détection de voie.

7. Dispositif électronique, comprenant au moins un processeur et un appareil de stockage configuré pour stocker de multiples codes de programme, les codes de programme étant adaptés à être chargés et exécutés par le ou les processeurs afin de réaliser un procédé de détection d'objets multitâche selon l'une quelconque des revendications 1 à 6.

8. Support de stockage non transitoire lisible par ordinateur sur lequel sont stockés une pluralité de codes de programme qui, lorsqu'ils sont exécutés par au moins un processeur, amènent le ou les processeurs à réaliser un procédé de détection d'objets multitâche selon l'une quelconque des revendications 1 à 6.

9. Véhicule, comprenant le dispositif électronique selon la revendication 7.
